# FASCICULE DE BREVET EUROPEEN

(11) **EP 1 726 389 B1**
(45) Date de publication et mention de la délivrance du brevet: **16.09.2009**
(21) Numéro de dépôt: 05104519.3
(22) Date de dépôt: 26.05.2005
(51) Int. Cl.: B23B 7/02, B23B 7/06

(54) **Machine-outil avec canon mobile pour la réalisation de pièces par décolletage**
Werkzeugmaschine mit mobiler Führungsbuchse für die Herstellung von Teilen durch Abstechen
Machine tool with mobile barrel for the truncating manufacture of pieces

(43) Date de publication de la demande: 29.11.2006
(73) Titulaire: TORNOS S.A., 2740 Moutier (CH)
(72) Inventeur: Paroz, Cédric, 2732 Saicourt (CH)
(74) Mandataire: BOVARD AG

(56) Documents cités:
- DE-A1- 1 552 410
- DE-U1- 20 215 705
- US-B1- 6 189 424

## Description

L'invention se rapporte à une machine-outil pour la réalisation par décolletage de pièces dans des barres de matériau. Selon le préambule de la revendication 1 et comme connu par exemple du document DE-A-1,552,410.

Par barre de matériau, dans la présente demande, on désigne tout élément rigide d'une certaine longueur, quelle que soit cette longueur, comportant une surface périphérique, dite première surface périphérique qui définit la section transversale de cette barre.

Une machine-outil de décolletage comprend généralement une structure constituée par un bâti qui s'appuie sur un support, tel le sol, et portés par ce bâti :
- au moins un ensemble fonctionnel dit broche porte-pièce équipé d'une partie active montée tournante autour d'un premier axe et qui permet de maintenir fermement la barre et de l'entraîner en rotation autour de son axe longitudinal de manière à permettre l'usinage de cette barre, notamment, au niveau de sa première extrémité, et ce, au moyen d'outils d'usinage,
- au moins un organe de guidage en rotation de la première extrémité de la barre autour d'un second axe, cet organe de guidage en rotation étant supporté par un premier élément structurel relié au bâti de la machine-outil de manière telle que le dit second axe soit sensiblement aligné avec ledit premier axe,
- au moins un premier système d'usinage comprenant au moins un outil d'usinage qui, d'une part, est guidé et déplacé dans au moins une première direction déterminée pour autoriser l'usinage de la barre et, d'autre part, est placé sous l'influence d'au moins une unité de commande.

Classiquement, la machine-outil est équipée de système d'usinage comportant au moins un outil d'usinage et chaque système d'usinage est associé au bâti par un appareil de guidage et de déplacement en translation.

Un résultat que l'invention vise à obtenir est une machine-outil qui comprend un nombre réduit d'appareils de guidage et de déplacement en translation mais qui conserve son potentiel technique.

A cet effet, l'invention a pour objet une machine-outil du type précité, cette machine-outil étant caractérisée en ce que :
- la broche porte-pièce est fixe dans une troisième direction parallèle à l'axe longitudinal de la barre, et
- le second élément structurel qui porte l'organe de guidage en rotation est associé au bâti par un second appareil de guidage et de déplacement en translation dans une quatrième direction qui est sensiblement parallèle au second axe défini par l'organe de guidage en rotation porté par ce second élément structurel, de manière à pouvoir être éloigné ou rapproché de la broche porte-pièce dans ladite quatrième direction.

L'invention sera bien comprise à la lecture de la description ci-après faite à titre d'exemple non limitatif en regard du dessin ci-annexé qui représente schématiquement :

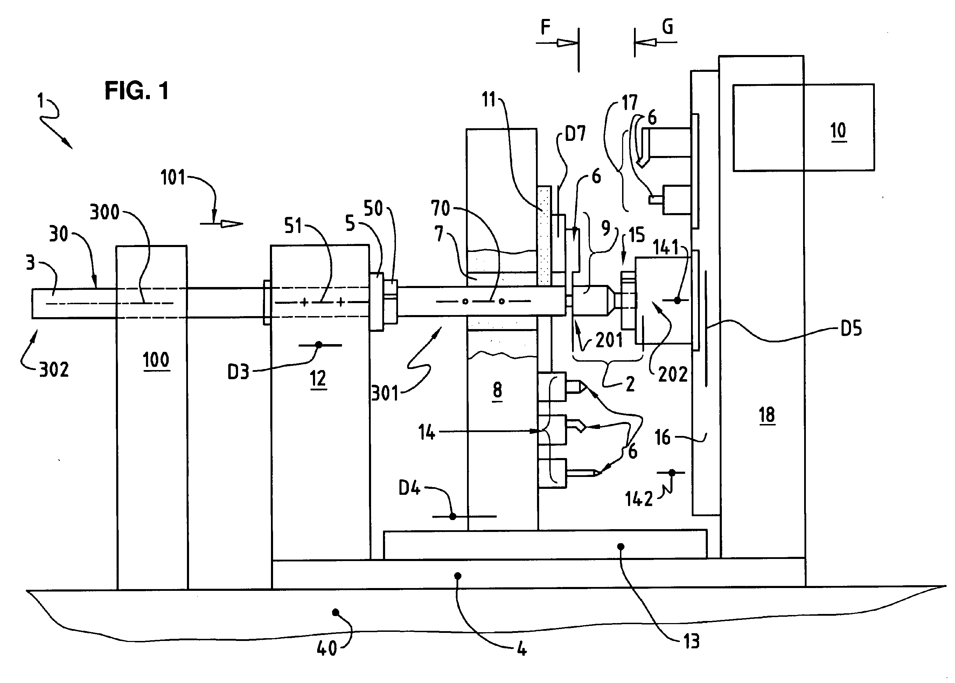

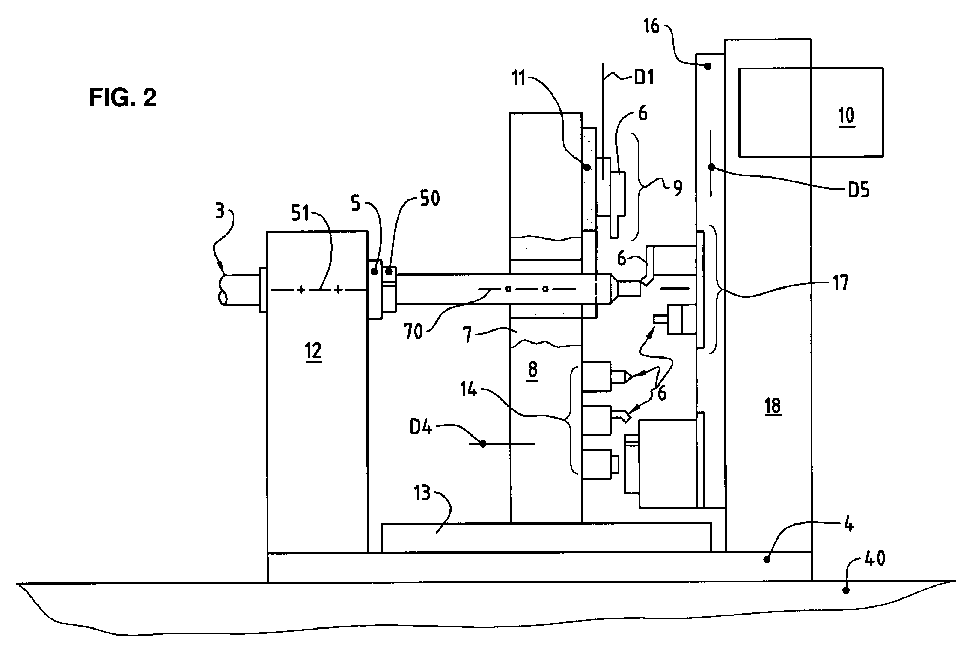

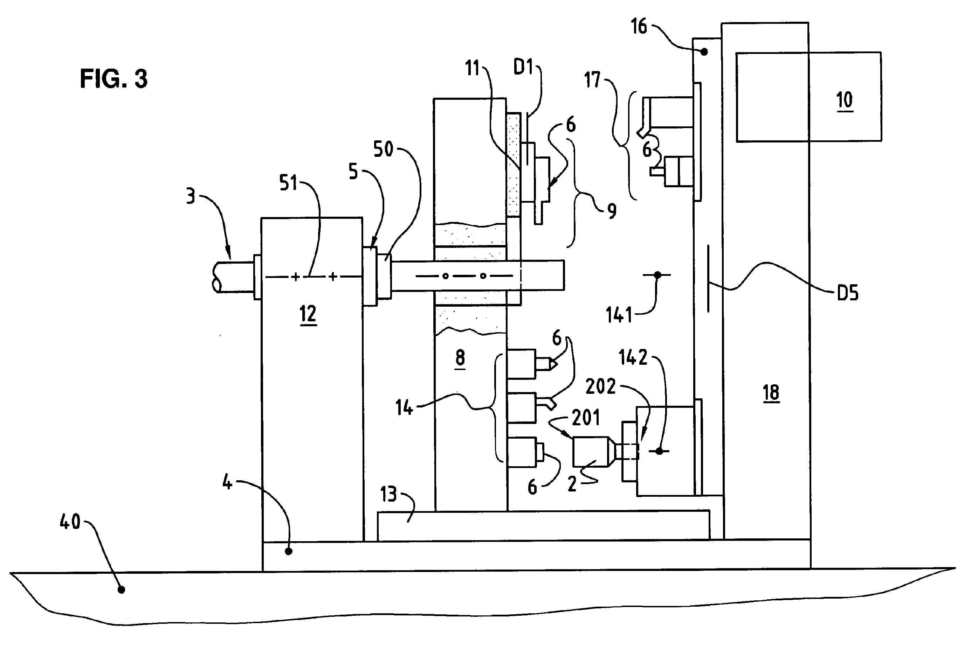

figures 1 à 3 : vue latéralement et localement en coupe, une machine-outil selon l'invention, dans trois configurations d'utilisation,

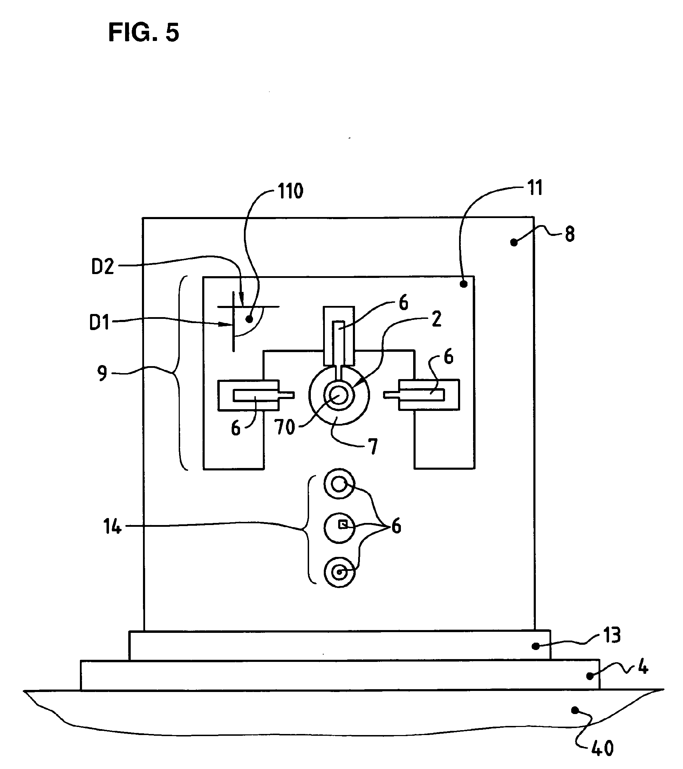

figures 4 et 5 : deux vues selon F et G de la machine-outil représentée en figure 1.

La représentation est faite de manière schématique et sous forme de blocs fonctionnels sans détails techniques et l'homme de l'art saura sans difficulté choisir des mécanismes et des organes fonctionnellement adaptés.

En se reportant au dessin on voit une machine-outil 1 pour la réalisation par décolletage de pièces 2 dans des barres 3 de matériau.

Par barre 3 de matériau, dans la présente demande, on désigne un élément rigide d'une certaine longueur, quelle que soit cette longueur, comportant une surface périphérique, dite première surface périphérique 30 qui définit la section transversale de cette barre 3.

Ci-après la barre 3 de matériau est plus simplement dite barre 3.

La barre 3 présente un axe longitudinal 300 et deux extrémités opposées, dites première extrémité 301 et deuxième extrémité 302.

Une machine-outil 1 de décolletage comprend généralement une structure constituée par un bâti 4 qui s'appuie sur un support 40, tel le sol, et portés par ce bâti 4 :
- au moins un premier ensemble fonctionnel dit broche porte-pièce 5 équipé d'une partie active 50 montée tournante autour d'un premier axe 51 et qui permet de maintenir fermement la barre 3 et de l'entraîner en rotation autour de son axe longitudinal 300 de manière à permettre l'usinage de cette barre 3, notamment, au niveau de sa première extrémité 301, et ce, au moyen d'outils d'usinage 6,
- au moins un organe 7 de guidage en rotation de la première extrémité 301 de la barre 3 autour d'un second axe 70, cet organe 7 de guidage en rotation étant supporté par un premier élément structurel 8 relié au bâti 4 de la machine-outil 1 de manière telle que le dit second axe 70 soit sensiblement aligné avec ledit premier axe 51,
- au moins un premier système d'usinage 9 comprenant au moins un outil d'usinage 6 qui, d'une part, est guidé et déplacé dans au moins une première direction D1 déterminée pour autoriser l'usinage de la barre 3 et, d'autre part, est placé sous l'influence d'au moins une unité de commande 10.

A la machine-outil 1 est associé un dispositif ravitailleur 100 situé en arrière de la broche porte-pièce 5 par rapport au sens 101 dans lequel la barre 3 est introduite dans la machine-outil 1.

Cette association est bien connue et couramment utilisée.

Le dispositif ravitailleur 100 n'a pas été représenté en détails car cela n'a pas d'incidence sur l'invention.

Lors de l'usinage, la pièce 2 et la première extrémité 301 de la barre 3 ne sont pas distinctes dans un premier temps, et ce n'est qu'après réalisation d'un certain nombre d'usinages que la pièce 2 existe physiquement en étant effectivement prélevée dans la barre 3.

Cela n'apparaît pas clairement sur les dessins, mais est largement connu de l'homme du métier.

Egalement, une fois détachée de la barre 3, une pièce 2 comporte une portion dite arrière 201 par laquelle elle était rattachée à la barre 3 et une portion opposée dite portion avant 202.

Par exemple, la machine-outil 1 est équipée d'au moins un premier système d'usinage 9 porté par un premier appareil 11 de guidage et de déplacement en translation dans au moins une première direction D1 située dans un premier plan 110 sécant à l'axe longitudinal 300 de la barre 3.

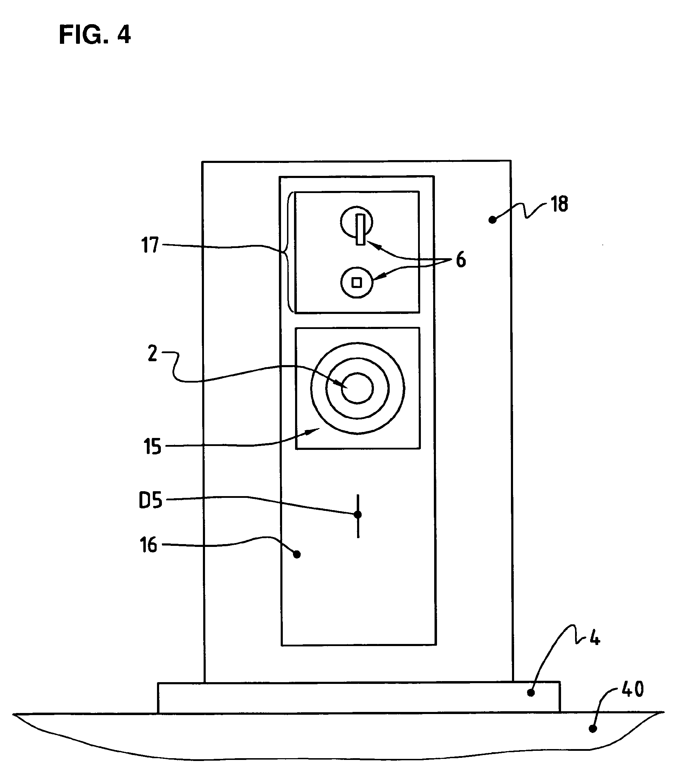

Tel que cela apparaît au dessin (figure 4) le premier système d'usinage 9 comprend au moins un outil d'usinage 6 destiné à être guidé et déplacé dans deux directions sécantes dont ladite première direction D1 et une seconde direction D2.

Par exemple, la machine-outil 1 porte au moins un premier système d'usinage 9, d'une part, équipé d'une pluralité d'outils d'usinage 6 qui sont destinés à être guidés et déplacés dans différents plans déterminés pour autoriser l'usinage complexe de la barre 3 et, d'autre part, placé sous l'influence d'au moins une unité de commande 10, par exemple numérique.

De manière notable, l'organe 7 de guidage en rotation de la barre 3 est porté par le premier élément structurel 8 relié au bâti 4.

Par exemple, c'est sur ce premier élément structurel 8 qu'est fixé le premier appareil 11 de guidage et de déplacement d'outils d'usinage 6 dans un premier plan 110 sensiblement orthogonal à l'axe longitudinal 300 de la barre 3.

Dans l'état de la technique (non représenté), d'une part, l'élément structurel qui porte l'organe 7 de guidage en rotation est fixe par rapport au bâti 4 et, d'autre part, la broche porte-pièce 5 est associée audit bâti 4 par un appareil de guidage et de déplacement en translation dans une troisième direction D3 parallèle au second axe 70 défini par l'organe 7 de guidage en rotation et est donc mobile dans une troisième direction D3 qui est sensiblement parallèle à l'axe longitudinal 300 de la barre 3.

La machine-outil 1 selon l'invention est remarquable en ce que :
- la broche porte-pièce 5 est fixe dans une troisième direction D3 parallèle à l'axe longitudinal 300 de la barre 3, et
- le premier élément structurel 8 qui porte l'organe 7 de guidage en rotation est associé au bâti 4 par un second appareil 13 de guidage et de déplacement en translation dans une quatrième direction D4 qui est sensiblement parallèle au second axe 70 défini par l'organe 7 de guidage en rotation porté par ce premier élément structurel 8, de manière à pouvoir être éloigné ou rapproché de la broche porte-pièce 5 dans ladite quatrième direction D4.

La broche porte-pièce 5 est notamment portée par un second élément structurel 12 supporté par le bâti 4.

De manière encore remarquable :
- d'une part, la machine comprend au moins un premier système d'usinage 9 comprenant au moins un outil d'usinage 6 qui, d'une part, est guidé et déplacé dans au moins une première direction D1 déterminée pour autoriser l'usinage de la barre 3 et, d'autre part, est placé sous l'influence d'au moins une unité de commande 10, et
- d'autre part, ce premier système d'usinage 9 est porté par le premier élément structurel 8.

Ces particularités techniques permettent de construire une machine-outil 1 qui, par rapport aux machines outils conventionnelles comporte un nombre réduit d'appareils de guidage et de déplacement en translation.

De manière remarquable, la machine-outil 1 est également équipée d'au moins un second système d'usinage 14 comprenant au moins un outil d'usinage 6 et ce second système d'usinage 14 est destiné à réaliser au moins un usinage en contre-opération, c'est-à-dire, un usinage de la partie arrière 201 d'une pièce 2 préalablement prélevée dans la barre 3.

De manière encore remarquable, la machine-outil 1 est également équipée d'une contre broche 15 destinée à saisir une pièce 2 obtenue par usinage de la première extrémité 301 de la barre 3, et cette contre broche 15 est reliée au bâti 4 par un troisième appareil 16 de guidage et de déplacement en translation dans une cinquième direction D5 radiale à l'axe de l'organe 7 de guidage en rotation et entre au moins deux positions 141, 142, dont une première position 141 dans laquelle elle est alignée avec l'axe de l'organe 7 de guidage en rotation et une deuxième position 142 éloignée de la première position 141 et dans laquelle ladite contre broche 15 est positionnée relativement à un outil d'usinage 6 du second système d'usinage 14, en vue de la réalisation d'au moins un usinage en contre-opération.

De manière notable, le second système d'usinage 14 est porté par le premier élément structurel 8 qui supporte l'organe 7 de guidage en rotation et orienté de manière à faire face à la contre broche 15.

On désigne par contre-opération toute opération d'usinage faite sur une portion dite arrière 201 d'une pièce 2 à usiner, après qu'une autre portion dite avant 202 de ladite pièce 2 ait été usinée.

Une contre-opération peut concerner aussi bien un usinage extérieur qu'un usinage intérieur de ladite portion arrière 201.

Pour effectuer une contre-opération sur une pièce 2, il est nécessaire de retirer la pièce 2, maintenue par sa portion arrière 201 dans l'organe 7 de guidage en rotation pour la fixer, par sa portion avant 202, dans une autre pince d'une autre broche porte-pièce dite contre-broche 15.

D'une manière également remarquable :
- la machine-outil comprend également un troisième système d'usinage 17 équipé d'au moins un outil 6,
- ce troisième système d'usinage 17 est porté par un troisième élément structurel 18 qui porte en outre le troisième appareil 16 de guidage et de déplacement en translation de la contre broche 15.

Le respect de ces particularités techniques permet de construire une machine d'usinage qui comprend un nombre réduit d'appareil de guidage et de déplacement en translation, mais un nombre de fonctionnalités au moins égal aux machines d'usinage classique du type à broche et contre broche.

De manière encore remarquable, le troisième système d'usinage 17 et la contre-broche 15 sont supportés par le dit troisième appareil 16 de guidage et de déplacement en translation, mais cette fonction est réalisée de manière telle qu'ils peuvent être déplacés indépendamment l'un de l'autre.

## Revendications

1. Machine-outil (1) pour la réalisation par décolletage de pièces (2) dans des barres (3) de matériau dite barres (3), chaque barre (3) présentant un axe longitudinal (300) et deux extrémités opposées, dites première extrémité (301) et deuxième extrémité (302),
la machine-outil (1) comprenant une structure constituée par un bâti (4) qui s'appuie sur un support (40), et portés par ce bâti (4) :
- au moins un premier ensemble fonctionnel dit broche porte-pièce (5) équipé d'une partie active (50) montée tournante autour d'un premier axe (51) et qui permet de maintenir fermement la barre (3) et de l'entraîner en rotation autour de son axe longitudinal (300) de manière à permettre l'usinage de cette barre (3), notamment, au niveau de sa première extrémité (301), et ce, au moyen d'outils d'usinage (6),
- au moins un organe (7) de guidage en rotation de la première extrémité (301) de la barre (3) autour d'un second axe (70), cet organe (7) de guidage en rotation étant supporté par un premier élément structurel (8) relié au bâti (4) de la machine-outil (1) de manière telle que le dit second axe (70) soit sensiblement aligné avec ledit premier axe (51),
- au moins un premier système d'usinage (9) comprenant au moins un outil d'usinage (6) qui, d'une part, est guidé et déplacé dans au moins une première direction (D1) déterminée pour autoriser l'usinage de la barre (3) et, d'autre part, est placé sous l'influence d'au moins une unité de commande (10),
cette machine-outil étant **caractérisée en ce que**
- la broche porte-pièce (5) est fixe dans une troisième direction (D3) parallèle à l'axe longitudinal (300) de la barre (3), et
- le premier élément structurel (8) qui porte l'organe (7) de guidage en rotation est associé au bâti (4) par un second appareil (13) de guidage et de déplacement en translation dans une quatrième direction (D4) qui est sensiblement parallèle au second axe (70) défini par l'organe (7) de guidage en rotation porté par ce premier élément structurel (8), de manière à pouvoir être éloigné ou rapproché de la broche porte-pièce (5) dans ladite quatrième direction (D4).

2. Machine-outil selon la revendication 1 **caractérisée en ce que** :
- d'une part, elle comprend au moins un premier système d'usinage (9) comprenant au moins un outil d'usinage (6) qui, d'une part, est guidé et déplacé dans au moins une première direction (D1) déterminée pour autoriser l'usinage de la barre (3) et, d'autre part, est placé sous l'influence d'au moins une unité de commande (10), et
- d'autre part, ce premier système d'usinage (9) est porté par le premier élément structurel (8).

3. Machine-outil selon la revendication 1 ou 2 **caractérisée en ce qu'**elle est également équipée d'au moins un second système d'usinage (14) comprenant au moins un outil d'usinage (6) et ce second système d'usinage (14) est destiné à réaliser au moins un usinage en contre-opération, c'est-à-dire, un usinage de la partie arrière (201) d'une pièce (2) préalablement prélevée dans la barre (3).

4. Machine-outil selon quelconque l'une des revendications 1 à 3 **caractérisée en ce qu'**elle est également équipée d'une contre broche (15) destinée à saisir une pièce (2) obtenue par usinage de la première extrémité (301) de la barre (3), et cette contre broche (15) est reliée au bâti (4) par un troisième appareil (16) de guidage et de déplacement en translation dans une cinquième direction (D5) radiale à l'axe de l'organe (7) de guidage en rotation et entre au moins deux positions (141, 142), dont une première position (141) dans laquelle elle est alignée avec l'axe de l'organe (7) de guidage en rotation et une deuxième position (142) éloignée de la première position (141) et dans laquelle ladite contre broche (15) est positionnée relativement à un outil d'usinage (6) du second système d'usinage (14), en vue de la réalisation d'au moins un usinage en contre-opération.

5. Machine-outil selon la revendication 4 **caractérisée en ce que** le second système d'usinage (14) est porté par le premier élément structurel (8) qui supporte l'organe (7) de guidage en rotation et orienté de manière à faire face à la contre broche (15).

6. Machine-outil selon l'une des revendications 4 ou 5 **caractérisée en ce qu'**elle comprend également un troisième système d'usinage (17) équipé d'au moins un outil (6), et ce troisième système d'usinage (17) est porté par un troisième élément structurel (18) qui porte en outre le troisième appareil (16) de guidage et de déplacement en translation de la contre broche (15).

7. Machine-outil selon la revendication 6 **caractérisée en ce que** le troisième système d'usinage (17) et la contre-broche (15) sont supportés par le dit troisième appareil (16) de guidage et de déplacement en translation, mais cette fonction est réalisée de manière telle qu'ils peuvent être déplacés indépendamment l'un de l'autre.

## Claims

1. Machine tool (1) for achieving by bar turning operation pieces (2) in bars (3) of material, referred to as bars (3), each bar (3) having a longitudinal axis (300) and two opposite ends, referred to as first end (301) and second end (302),
the machine tool (1) comprising a structure constituted by a frame (4) which rests on a support (40), and borne by this frame (4):
- at least one first functional assembly, referred to as workpiece holder (5), equipped with an active part (50) mounted turning about a first axis (51) and which allows the bar (3) to be tightly held and allows it to be driven in rotation about its longitudinal axis (300) in such a way as to permit the machining of this bar (3), in particular at the level of its first end (301), and this by means of cutting tools (6),
- at least one element (7) for guiding in rotation of the first end (301) of the bar (3) about a second axis (70), this element (7) for guiding in rotation being supported by a first structural element (8) connected to the frame (4) of the machine tool (1) in such a way that said second axis (70) is substantially aligned with said first axis (51),
- at least one first machining system (9) comprising at least one cutting tool (6) which, on the one hand, is guided and displaced in at least a first predetermined direction (D1) to allow the machining of the bar (3) and, on the other hand, is placed under the influence of at least one control unit (10),
this machine tool being **characterised in that**
- the workpiece spindle (5) is fixed in a third direction (D3) parallel to the longitudinal axis (300) of the bar (3), and
- the first structural element (8), which bears the element (7) for guiding in rotation, is connected to the frame (4) by a second apparatus (13) for guiding and displacement in translation in a fourth direction (D4), which is substantially parallel to the second axis (70) defined by the element (7) for guiding in rotation borne by this first structural element (8), in such a way as to be able to be moved away from, or brought closer to, the workpiece spindle (5) in said fourth direction (D4).

2. Machine tool according to claim 1, **characterised in that**:
- on the one hand, it comprises at least a first machining system (9) comprising at least one cutting tool (6) which, on the one hand, is guided and displaced in at least a first predetermined direction (D1) in order to allow the machining of the bar (3) and, on the other hand, is placed under the influence of at least one control unit (10), and
- on the other hand, this first machining system (9) is borne by the first structural element (8).

3. Machine tool according to claim 1 or 2, **characterised in that** it is also equipped with at least a second machining system (14) comprising at least one cutting tool (6), and this second machining system (14) is intended to achieve at least one machining in counter-operation mode, i.e. a machining of the rear part (201) of a piece (2) previously cut from the bar (3).

4. Machine tool according to any one of the claims 1 to 3, **characterised in that** it is also equipped with a counter-spindle (15) intended to grasp a piece (2) obtained by machining of the first end (301) of the bar (3), and this counter-spindle (15) is connected to the frame (4) by a third apparatus (16) for guiding and displacement in translation in a fifth direction (D5), radial with respect to the axis of the element (7) for guiding in rotation, and between at least two positions (141, 142), which are a first position (141) in which it is aligned with the axis of the element (7) for guiding in rotation and a second position (142) moved away from the first position (141), and in which said counter-spindle (15) is positioned relative to a cutting tool (6) of the second machining system (14), with a view to achieving at least one machining operation in counter-operation mode.

5. Machine tool according to claim 4, **characterised in that** the second machining system (14) is borne by the first structural element (8) which supports the element (7) for guiding in rotation, and is oriented so as to face the counter-spindle (15).

6. Machine tool according to one of the claims 4 or 5, **characterised in that** it also comprises a third machining system (17) equipped with at least one tool (6), and this third machining system (17) is borne by a third structural element (18) which bears in addition the third apparatus (16) for guiding and displacement in translation of the counter-spindle (15).

7. Machine tool according to claim 6, **characterised in that** the third machining system (17) and the counter-spindle (15) are supported by said third apparatus for guiding and displacement in translation (16), but this function is achieved in such a way that they can be displaced independently of one another.

## Patentansprüche

1. Werkzeugmaschine (1) zur Herstellung von Teilen (2) durch Abstechen von Werkstückstangen (3), genannt Stangen (3) wobei jede Stange (3) eine Längsachse (300) und zwei entgegen gesetzte Enden, genannt erstes Ende (301) und zweites Ende (302) hat,
wobei die Werkzeugmaschine (1) im Aufbau aus einem Untergestell (4) besteht, das auf einem Untergrund (40) steht und Folgendes trägt:
- mindestens eine erste Funktionseinheit, die genannte Werkstückspindel (5), die mit einer um eine erste Achse (51) drehend montierten Spitze (50) versehen ist und mit der die Stange (3) festgehalten und um ihre Längsachse (300) drehangetrieben wird, um die Bearbeitung der Stange (3), vor allem in Höhe des ersten Endes (301) und zwar mit Hilfe der Bearbeitungswerkzeuge (6) zu ermöglichen,
- mindestens eine um eine zweite Achse (70) rotierende Führungseinrichtung (7) des ersten Endes (301) der Stange (3), wobei diese Führungseinrichtung (7) von einem ersten Bauelement (8) gehalten wird, das so am Gestell (4) der Werkzeugmaschine (1) befestigt ist, dass die genannte zweite Achse (70) im Wesentlichen mit der genannten ersten Achse (51) in einer Linie ist,
- mindestens ein erstes Bearbeitungssystem (9), das mindestens ein Bearbeitungswerkzeug (6) enthält, das zum einen mindestens in eine erste Richtung (D1) zwecks Freigabe der Bearbeitung der Stange (3) geführt und verschoben wird und zum anderen von mindestens einer Steuereinheit (10) gelenkt wird,
wobei diese Werkzeugmaschine **gekennzeichnet** wird durch
- die Werkstückspindel (5), die in einer dritten Richtung (D3) parallel zur Längsachse (300) der Stange (3) fest ist und
- das erste Bauelement (8), das die rotierende Führungseinrichtung (7) trägt, das am Gestell (4) über eine zweite Führungs- und Parallelverschiebeeinrichtung (13) in eine vierte Richtung (D4), im Wesentlichen parallel zur zweiten Achse (70), welche sich durch die rotierende Führungseinrichtung (7) definiert, die von diesem ersten Bauelement (8) getragen wird, befestigt ist, so dass das erste Bauelement (8) in genannter vierter Richtung (D4) von der Werkzeugspindel weg oder auf diese zu bewegt werden kann.

2. Werkzeugmaschine nach Anspruch 1, **dadurch gekennzeichnet, dass**:
- sie einerseits mindestens ein Bearbeitungssystem (9) mit mindestens einem Bearbeitungswerkzeug (6) besitzt, wobei letzteres zum einen in mindestens eine erste Richtung (D1) zwecks Freigabe der Bearbeitung der Stange (3) geführt und verschoben wird und zum zweiten von mindestens einer Steuereinheit (10) gelenkt wird, und dass
- andererseits dieses erste Bearbeitungssystem (9) vom ersten Bauelement (8) getragen wird.

3. Werkzeugmaschine nach Ansprüchen 1 oder 2, **dadurch gekennzeichnet, dass** sie ebenfalls mit mindestens einem zweitem Bearbeitungssystem (14) ausgestattet ist, das mindestens ein Bearbeitungswerkzeug (6) enthält, wobei dieses zweite Bearbeitungssystem (14) dazu gedacht ist, mindestens eine Rückseitenbearbeitung, das heißt eine Bearbeitung des hinteren Teils (201) eines zuvor von der Stange (3) abgestochenen Teils (2) durchzuführen.

4. Werkzeugmaschine nach irgendeinem der Ansprüche 1 bis 3, **dadurch gekennzeichnet, dass** sie ebenfalls mit einer Gegenspindel (15) ausgestattet ist, die dazu dient, ein Teil (2) zu greifen, das durch die Bearbeitung des ersten Endes (301) der Stange (3) entstanden ist; diese Gegenspindel (15) ist mit dem Gestell (4) über eine dritte Führungs- und Parallelverschiebeeinrichtung (16) verbunden, die sich in einer fünften Richtung (D5) radial zur Achse der rotierenden Führungseinrichtung (7) und zwischen mindestens zwei Positionen (141, 142) bewegt, darunter eine erste Position (141), in der die Gegenspindel parallel zur Achse der rotierenden Führungseinrichtung (7) ist sowie eine zweite Position (142), die von der ersten Position (141) entfernt ist und in der die genannte Gegenspindel (15) relativ zu einem Bearbeitungswerkzeug (6) des zweiten Bearbeitungssystems (14) positioniert ist, mit dem Ziel, dass mindestens eine Rückseitenbearbeitung durchgeführt werden kann.

5. Werkzeugmaschine nach Anspruch 4, **dadurch gekennzeichnet, dass** das zweite Bearbeitungssystem (14) vom ersten Bauelement (8), das die rotierende Führungseinrichtung (7) hält, getragen wird und so ausgerichtet ist, dass es der Gegenspindel (15) gegenüber liegt.

6. Werkzeugmaschine nach Ansprüchen 4 oder 5, **dadurch gekennzeichnet, dass** sie ebenfalls ein drittes Bearbeitungssystem (17) beinhaltet, das mit mindestens einem Bearbeitungswerkzeug (6) ausgestattet ist, wobei dieses dritte Bearbeitungssystem (17) von einem dritten Bauelement (18) getragen wird, das außerdem die dritte Führungs- und Parallelverschiebeeinrichtung (16) der Gegenspindel (15) trägt.

7. Werkzeugmaschine nach Anspruch 6, **dadurch gekennzeichnet, dass** das dritte Bearbeitungssystem (17) und die Gegenspindel (15) von der genannten dritten Führungs- und Parallelverschiebeeinrichtung (16) gehalten werden, wobei diese Funktion jedoch so realisiert ist, dass sie unabhängig voneinander bewegt werden können.
